# EUROPÄISCHE PATENTSCHRIFT

(11) **EP 2 008 857 B1**
(45) Veröffentlichungstag und Bekanntmachung des Hinweises auf die Patenterteilung: **03.03.2010**
(21) Anmeldenummer: 08008704.2
(22) Anmeldetag: 09.05.2008
(51) Int. Cl.: B60K 15/035

(54) **Kraftstofftank für Kraftfahrzeuge**
Fuel tank for motor vehicles
Réservoir de carburant pour véhicules automobiles

(30) Priorität: 27.06.2007 DE 102007030040; 18.03.2008 DE 102008014820
(43) Veröffentlichungstag der Anmeldung: 31.12.2008
(73) Patentinhaber: Alfmeier Präzision AG Baugruppen und Systemlösungen, 91757 Treuchtlingen (DE)
(72) Erfinder: Roscher, Richard, 91799 Langenaltheim (DE); Theissler, Jürgen, 91522 Ansbach (DE)
(74) Vertreter: Mörtel & Höfner

(56) Entgegenhaltungen:
- EP-A- 1 236 605
- US-A1- 2005 284 875

## Beschreibung

Die Erfindung betrifft einen Kraftstofftank für Kraftfahrzeuge, wie er z.B. aus der EP 1 236 605 A2 bekannt ist. Um eine Be- bzw. Entlüftung des Kraftstofftanks zu ermöglichen, ist dieser mit wenigstens einem ein Ventilgehäuse und eine Entlüftungsöffnung aufweisenden Entlüftungsventil ausgestattet, welches in einer oberen Öffnung des Tanks eingesetzt ist und in das Tankinnere hineinragt. Die Wand des Ventilgehäuses ist von Wandöffnungen durchsetzt, durch welche Gas bzw. ein Kraftstoffdampf-Luft-Gemisch und flüssiger Kraftstoff hindurch strömen können. Im Ventilgehäuse ist ein zwischen einer Ruhestellung und einer Schließstellung beweglicher Schwimmer angeordnet, der an seinem oberen Ende ein Dichtelement trägt. In der Ruhestellung befindet sich der Schwimmer in einer unteren Position im Ventilgehäuse, wobei das Dichtelement die Entlüftungsöffnung freigibt. In der Schließstellung verschließt das Dichtelement bei einem vorgegebenen Kraftstoffpegel, der im Folgenden mit Schließpegel bezeichnet wird, die Entlüftungsöffnung. Wenn beispielsweise beim Betanken über ein am Kraftstofftank vorhandenes Einfüllrohr Kraftstoff zugeführt wird, kann bei Erreichen des Schließpegels kein Gas mehr über die Entlüftungsöffnung den Tank verlassen. Bei zunächst fortgesetzter Betankung steigt der Kraftstoffspiegel unter Aufbau eines Tankinnendrucks im Tank und schließlich auch im Einfüllrohr an, was letztlich zum Abschalten der Zapfpistole führt.

Derartige Ventile weisen - wie weiter unten noch näher erläutert wird - eine sog. Wiederbetankungs-Hysterese auf, d.h. es muss eine relativ große Menge an Kraftstoff verbraucht werden, bis der Kraftstoffspiegel so weit abgesunken ist, dass der Schwimmer bzw. das an ihm vorhandene Dichtelement die Entlüftungsöffnung wieder freigibt.

Davon ausgehend ist es die Aufgabe der Erfindung, einen Kraftstofftank für ein Kraftfahrzeug vorzuschlagen, der hinsichtlich des genannten Nachteils verbessert ist.

Bei einem Kraftstofftank nach Anspruch 1, ist zwischen dem Ventilinnenraum (12) des Ventilgehäuses (8) und dem Tankinnenraum (13) ein Verbindungskanal (K)vorhanden, welcher mit einer unterhalb des Schließpegels (27) liegenden Mündungsöffnung (22) in den Tankinnenraum (13) mündet. Die Aufgabe der Erfindung wird dadurch gelöst, dass die Mündungsöffnung (22) oberhalb von allen sonstigen unmittelbar mit dem Tankinnenraum in Verbindung stehenden Wandöffnungen (17) des Gehäuses angeordnet ist. Wenn hier und im Folgenden von oberhalb und unterhalb gesprochen wird, so ist darunter, falls etwas anderes nicht angegeben ist, geodätisch ober- und unterhalb, also eine relative Höhenlage zu verstehen.

Nähere Einzelheiten zu dieser Ausgestaltung sowie zu weiteren den Unteransprüchen entnehmbaren vorteilhaften Ausgestaltungen gehen aus der folgenden, auf die beigefügten schematischen Zeichnungen Bezug nehmenden Beschreibung hervor. Es zeigen:
- Fig. 1: einen üblichen Kraftstofftank nach dem Stand der Technik mit geöffneter Entlüftungsöffnung,
- Fig. 2: den Kraftstofftank von Fig. 1, jedoch mit geschlossener Entlüftungsöffnung,
- Fig. 3: eine erstes Ausführungsbeispiel eines erfindungsgemäßen Kraftstofftanks,
- Fig. 4: ein zweites Ausführungsbeispiel eines erfindungsgemäßen Kraftstofftanks mit geöffneter Entlüftungsöffnung,
- Fig. 5: den Kraftstofftank von Fig. 4, jedoch mit geschlossener Entlüftungsöffnung,
- Fig. 6: ein drittes Ausführungsbeispiel eines erfindungsgemäßen Kraftstofftanks mit geöffneter Entlüftungsöffnung,
- Fig. 7: den Kraftstofftank von Fig. 6, jedoch mit geschlossener Entlüftungsöffnung,
- Fig. 8: ein viertes Ausführungsbeispiel eines erfindungsgemäßen Kraftstofftanks,
- Fig. 9: ein fünftes Ausführungsbeispiel eines erfindungsgemäßen Kraftstofftanks,
- Fig. 10: ein sechstes Ausführungsbeispiel eines erfindungsgemäßen Kraftstofftanks.

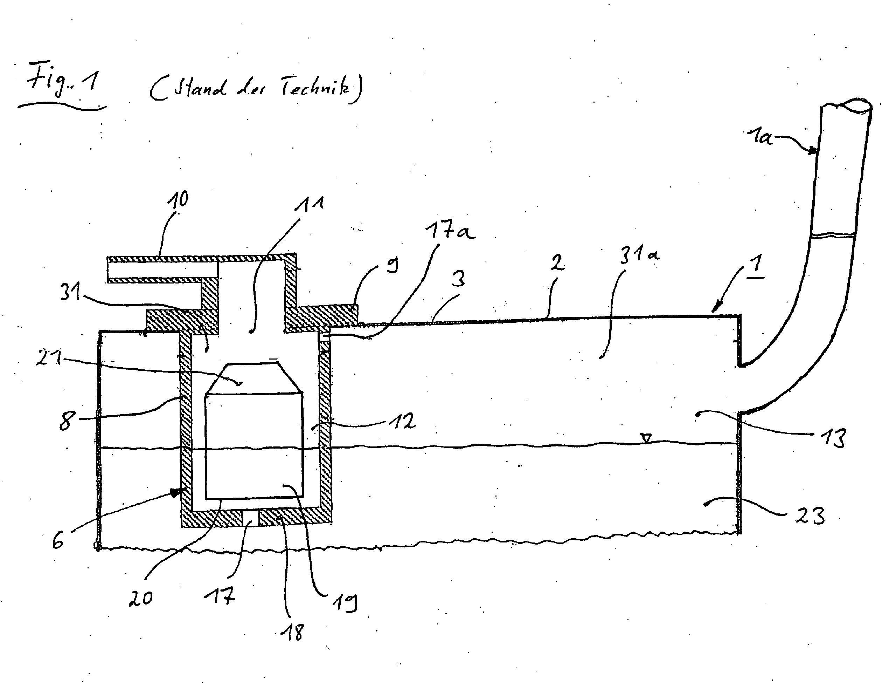

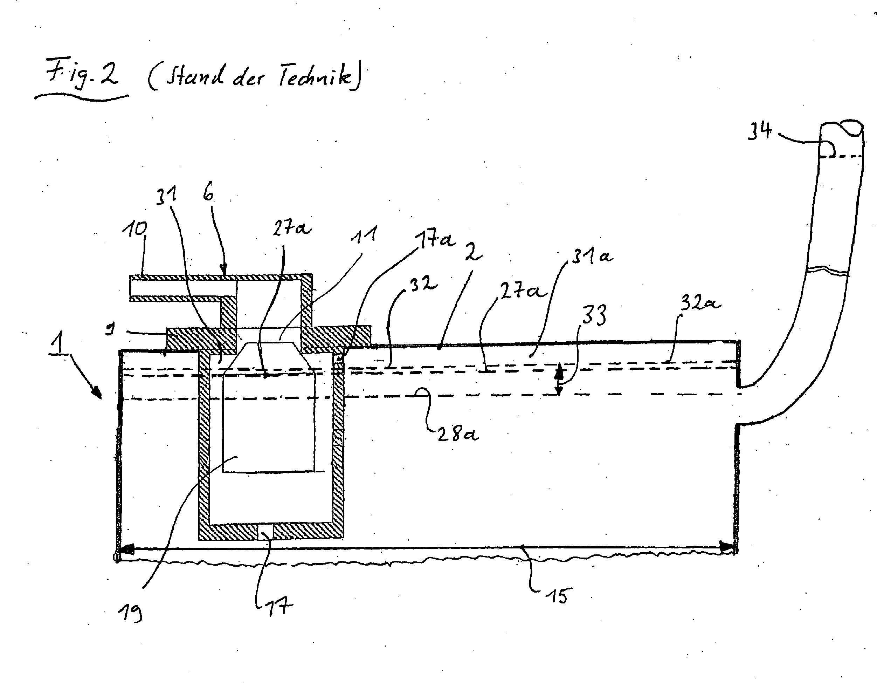

Die Abbildungen zeigen allesamt den oberen Bereich eines Kraftstofftanks 1, der von einer oberen Wand 2 verschlossen ist. In eine Öffnung der Wand 2 ist ein ein Ventilgehäuse 8 aufweisendes Entlüftungsventil 6 eingesetzt, das sich in den Tankinnenraum 13 hineinerstreckt. Das Entlüftungsventil 6 stützt sich mit einem Flansch 9 auf der Oberseite 3 der Wand 2 ab. Am Flansch 9 ist ein Anschlussstutzen 10 angeformt. Dieser ist einerseits über eine Entlüftungsöffnung 11 mit dem Tankinnenraum 13 fluidisch verbunden und andererseits an eine Entlüftungsleitung (nicht dargestellt) anschließbar, welche zu einem Aktivkohlekanister (nicht dargestellt) führt. In der Wand des beispielsweise zylindrischen Ventilgehäuses 8 sind mehrere dem Zu- und Austritt von flüssigem Kraftstoff und Gas dienende Wandöffnungen 17 vorhanden. Innerhalb des Ventilgehäuses 8 ist ein Schwimmer 19 zwischen einer Ruhestellung (siehe z.B. Fig. 1) und einer Schließstellung (siehe z.B. Fig. 2) beweglich angeordnet. In der Ruhestellung befindet sich der Schwimmer in einer unteren Position, wobei die Entlüftungsöffnung 11 geöffnet ist. In der Schließstellung verschließt der Schwimmer 19 mit einem an ihm oberseitig vorhandenen Dichtelement 21 die Entlüftungsöffnung 11. Neben der Entlüftungsfunktion hat das Entlüftungsventil 6 die weitere Aufgabe, den Füllstand des Kraftstoffs beim Betanken zu begrenzen. Das Entlüftungsventil kann auch als Roll-over-Ventil ausgestaltet sein. Es ist in diesem Fall von einer Druckfeder (nicht gezeigt) in Schließrichtung beaufschlagt.

Die Füllstandsbegrenzung herkömmlicher Kraftstofftanks bzw. Entlüftungsventile arbeitet folgendermaßen: Wird ausgehend von der in Fig. 1 gezeigten Stellung des Schwimmers 19 Kraftstoff 23 über ein Einfüllrohr 1a (Fig. 1) in den Tank eingefüllt, wird der Schwimmer 19 von dem ansteigenden Kraftstoff angehoben. Von dem eingefüllten Kraftstoff aus dem Tankinnenraum 13 verdrängtes Gas gelangt über die Öffnungen 17 in das Ventilgehäuse 8 und von dort zur Entlüftungsöffnung 11. Ab dem Moment des Verschlusses der Entlüftungsöffnung 11 durch den Schwimmer 19 kann von dem in den Kraftstofftank einströmenden Kraftstoff verdrängtes Gas nicht mehr über die Entlüftungsöffnung 11 den Tank verlassen. Der Pegel innerhalb des Entlüftungsventils 6, bei dem der Schwimmer 19 gerade so weit angehoben ist, dass die Entlüftungsöffnung 11 durch das Dichtelement 21 verschlossen wird, ist der Schließpegel 27. Der Schließpegel 27 lässt sich für jedes Entlüftungsventil bzw. für jede Ventilbauart berechnen oder auch empirisch bestimmen.

Bei dem in Fig.1 und 2 gezeigten herkömmlichen Kraftstofftank ist eine oberste, oberhalb des Schließpegels 27 angeordnete Wandöffnung 17a vorhanden, die unmittelbar in den Tankinnenraum 13 mündet. Die Wandöffnung 17a bildet zwar auch einen Verbindungskanal zwischen dem Ventil- und dem Tankinnenraum 12 bzw. 13, sie ist aber oberhalb des Schließpegels 27 positioniert. Aufgrund dieser Höhenposition ist der sich oberhalb des Schließpegels befindliche Bereich des Ventilinnenraums 12 bzw. ein darin vorhandenes Gaspolster 31 stets mit dem sich oberhalb des Kraftstoffspiegels des Tankinnenraums 12 befindlichen Gaspolster 31a verbunden. Die Folge dieser Ausgestaltung ist, dass sich die Kraftstoffpegel innerhalb und außerhalb des Ventilgehäuses 8 einander angleichen. So stellt sich beispielsweise in dem in Fig. 2 gezeigten Zustand ein einheitlicher, sich über die gesamte Querschnittsfläche des Tankinnenraums 13 erstreckender Schließpegel 27a ein.

Wenn im Verlauf des Betankungsvorgangs der Schließpegel 27a erreicht und die Entlüftungsöffnung 11 verschlossen ist, kann zunächst noch weiter Kraftstoff in den Tank gefüllt werden. Als Folge des weiter in den Kraftstofftank einfließenden Kraftstoffs steigt der Druck in den Gaspolstern 31,31a an, da diese wegen der geschlossenen Entlüftungsöffnung 11 und auch deswegen von der Atmosphäre abgetrennt sind weil ein gegebenenfalls am Tank vorhandener, zur Entlüftung des Tanks während des Fahrzeugbetriebs dienendes Betriebsentlüftungssystem (nicht gezeigt) während des Betankungsvorgangs geschlossen ist. Aufgrund des Druckanstiegs im Tank steigt der Kraftstoff im Einfüllrohr 1a bis auf ein bestimmtes sich oberhalb des Kraftstoffpegels im Kraftstofftank 1 befindliches Niveau 34 an, was zum Abschalten der Zapfpistole führt. Der dabei im Kraftstofftank 1 vorhandene Kraftstoffpegel, der Abschaltpegel 32, ist höher als der Schließpegel 27a, so dass der Schwimmer 19 weiter in den Kraftstoff taucht als zum Zeitpunkt des Verschlusses der Entlüftungsöffnung 11, was mit einer entsprechenden Zunahme der Kraft verbunden ist, mit der der Schwimmer 19 das Dichtelement 21 gegen die Entlüftungsöffnung 11 bzw. einen diese umfassenden Dichtsitz drückt. Vor allem aufgrund dieser über den Schließpegel hinausgehenden Überfüllung und einem in den Gaspolstern 31,31a gegebenenfalls vorhandenen Überdruck (zu dessen Entstehung auch verdampfender Kraftstoff beitragen kann), ist das Wiederöffnen der Entlüftungsöffnung 11 mit einer Hysterese behaftet. Das bedeutet, dass der Schwimmer 19 die Entlüftungsöffnung erst dann frei gibt, wenn der Kraftstoffpegel auf einen Pegel, den Öffnungspegel 28a abgesunken ist, der ein Stück weit unterhalb des Schließpegels 27a liegt. Die Kraftstoffmenge, die verbraucht werden muss, bis der Schwimmer 19 die Entlüftungsöffnung 11 wieder freigibt, ist relativ groß. Sie kann beispielsweise bis zu 6 1 und mehr betragen. Sie ergibt sich im Wesentlichen aus der Innenquerschnittsfläche 15 des Tanks und dem Abstand 33 zwischen dem Öffnungspegel 28a und dem Abschaltpegel 32a. Im Mietwagengeschäft führt dies dazu, dass bei geringen Fahrstrecken ein Wiederbetanken des Mietwagens vor dessen Zurückgabe an den Vermieter nicht möglich ist, so dass der Kraftstoffverbrauch zu Lasten des nächsten Kunden oder des Vermieters geht.

Die genannten Nachteile sind bei einem erfindungsgemäßen Kraftstofftank nicht vorhanden, was, wie weiter oben schon angegeben, dadurch erreicht wird, dass zwischen dem Ventilinnenraum 12 des Ventilgehäuses 8 und dem Tankinnenraum 13 ein Verbindungskanal K vorhanden ist, welcher mit einer unterhalb des Schließpegels 27 liegenden Mündungsöffnung 22 in den Tankinnenraum 13 mündet, wobei die Mündungsöffnung 22 oberhalb von allen sonstigen unmittelbar mit dem Tankinnenraum in Verbindung stehenden Wandöffnungen 17 angeordnet ist. Diese Ausgestaltung hat den Effekt, dass nach Überflutung der Mündungsöffnung 22 mit Kraftstoff der Kraftstoffspiegel im Wesentlichen nur innerhalb des Ventilgehäuses 8 ansteigen kann, so dass die zur Wiederöffnung des Entlüftungsventils 6 erforderliche Absenkung des Kraftstoffspiegels sich im Wesentlichen auf den sich innerhalb des Ventilgehäuses 8 befindlichen Kraftstoff beschränkt. Dementsprechend ist die bis zum Wiederöffnen des Entlüftungsventils zu verbrauchende Kraftstoffmenge gegenüber herkömmlichen Kraftstofftanks wesentlich verringert.

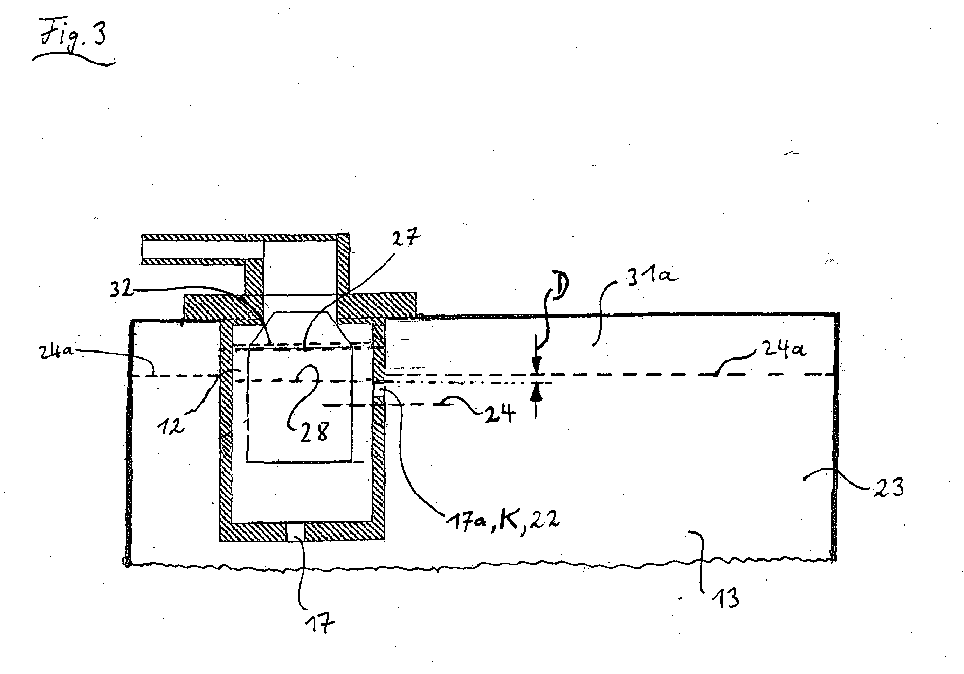

Bei einem ersten Ausführungsbeispiel, das in Fig. 3 gezeigt ist, ist der Verbindungskanal K eine oberhalb sonstiger Wandöffnungen 17 positionierte oberste Wandöffnung 17a, die gleichzeitig auch die o.g. Mündungsöffnung 22 bildet. Solange sich beim Betankungsvorgang der Pegel 24 des Kraftstoffs 23 unterhalb der Wandöffnung 17a befindet, sind die Kraftstoffpegel im Tankinnenraum 13 und im Gehäuseinnenraum 12 gleich. Sobald jedoch der Kraftstoffpegel 24 so weit angestiegen ist, dass die Wandöffnung 17a vollständig vom Kraftstoffs überflutet ist, kann der Pegel des Kraftstoffs außerhalb des Entlüftungsventils 11, also im Tankinnenraum 13 allenfalls nur geringfügig ansteigen, da das sich oberhalb des Kraftstoffs befindliche Gaspolster 31a keine Verbindung zur Atmosphäre hat und sich darin ein Gegendruck aufbaut. Der Ventilinnenraum 12 ist jedoch noch über die Entlüftungsöffnung 11 mit der Atmosphäre verbunden, so dass über geodätisch tiefer als die Wandöffnung 17a liegende Wandöffnungen 17 Kraftstoff in den Ventilinnenraum 12 strömen kann. Wenn der Kraftstoff den Schließpegel 27, der sich nur innerhalb des Ventilgehäuses 8 einstellt, erreicht hat, wird die Entlüftungsöffnung 11 von dem Dichtelement 21 verschlossen. Nach diesem Zeitpunkt in den Kraftstofftank geförderter Kraftstoff führt zu einer Druckerhöhung im Ventilinnenraum 12 und im Tankinnenraum 13 bzw. den entsprechenden Gaspolstern 31,31a, was die Ursache für das Ansteigen des Kraftstoffs im Einfüllrohr 1a und letztlich für das Abschalten der Zapfpistole ist. Zum Abschaltzeitpunkt hat sich der Pegel innerhalb des Ventilgehäuses 8 auf den Abschaltpegel 32 erhöht. Außerhalb stellt sich der wesentlich niedrigere Kraftstoffpegel 24a ein.

Ein Wiederöffnen der Entlüftungsöffnung 11 kann erst dann erfolgen, wenn der Kraftstoffpegel im Ventilinnenraum 12 auf den Öffnungspegel 28 abgesunken ist. Gegenüber dem oben beschriebenen herkömmlichen Kraftstofftank muss dazu aber eine wesentlich geringere Kraftstoffmenge verbraucht werden, nämlich im Wesentlichen nur so viel, bis der Kraftstoffpegel 24a außerhalb des Ventilgehäuses 8 so weit abgesunken ist, dass das Gaspolster 31a über die Wandöffnung 17a mit dem Ventilinnenraum 12 in Verbindung steht, weil sich dann die Pegeldifferenz zwischen dem Ventilinnenraum 12 und dem Tankinnenraum 13 ausgleichen kann, wobei sich innerhalb des Entlüftungsventils 6 der Öffnungspegel 28 einstellt bzw. dieser unterschritten wird und der Schwimmer 19 die Entlüftungsöffnung 11 freigibt. Außerhalb des Entlüftungsventils 6, also im Tankinnenraum liegt dann ein entsprechender Kraftstoffpegel vor. Die nach den vorliegenden Verhältnissen, insbesondere Druckverhältnissen im Tank und auch abhängig davon, ob am Tank eine Betriebsentlüftung der oben genannten Art vorhanden ist oder nicht, ist es auch denkbar, das der Kraftstoffspiegel (Abschaltpegel 32) innerhalb des Ventilgehäuses 8 absinkt, wobei innerhalb und außerhalb des Ventilgehäuses 8 der gleiche Pegelstand vorhanden ist, etwa ein solcher entsprechend dem Kraftstoffpegel 24a. Wenn dieser oberhalb des Abschaltpegels liegt, beispielsweise im die Höhendifferenz D, so muss bis zum Erreichend es Abschaltpegels 28 ein Kraftstoffvolumen dem Tank entnommen werden, welches sich aus der Höhendifferenz D und der Querschnittsfläche des Tanks, abzüglich der durch das Ventilgehäuse 8 und den Schwimmer 19 verdrängten Volumina, ergibt.

Der genannte Ausgleich der Pegel bzw. das Absinken des Kraftstoffpegels im Ventilgehäuse 8 auf den Öffnungspegel 28 wird während des Fahrzeugbetriebs noch dadurch unterstützt, dass durch Hin- und Herschwappen des Kraftstoffs die Wandöffnung 17a zeitweise freigegeben wird. Eine besonders schnelle Wiederöffnung des Entlüftungsventils 6 wird erreicht, wenn die Wandöffnung 17a bzw. die Mündungsöffnung 22 möglichst knapp unterhalb des Öffnungspegels 28 angeordnet wird.

Eine weitere Möglichkeit, den oben erwähnten Verbindungskanal K zu verwirklichen besteht darin, dass dieser von einem außerhalb des Ventilinnenraums 12 angeordneten, von einer Wand umgrenzten Raum gebildet ist, der mit dem Tankinnenraum 13 über wenigstens eine Mündungsöffnung 22 und mit dem Ventilinnenraum 12 über wenigstens eine oberhalb sonstiger Wandöffnungen 17 positionierten obersten Wandöffnung 17b fluidisch verbunden ist. Die einzige Verbindung des Raums zum Tankinnenraum 13 ist somit die wenigstens eine Mündungsöffnung 22.

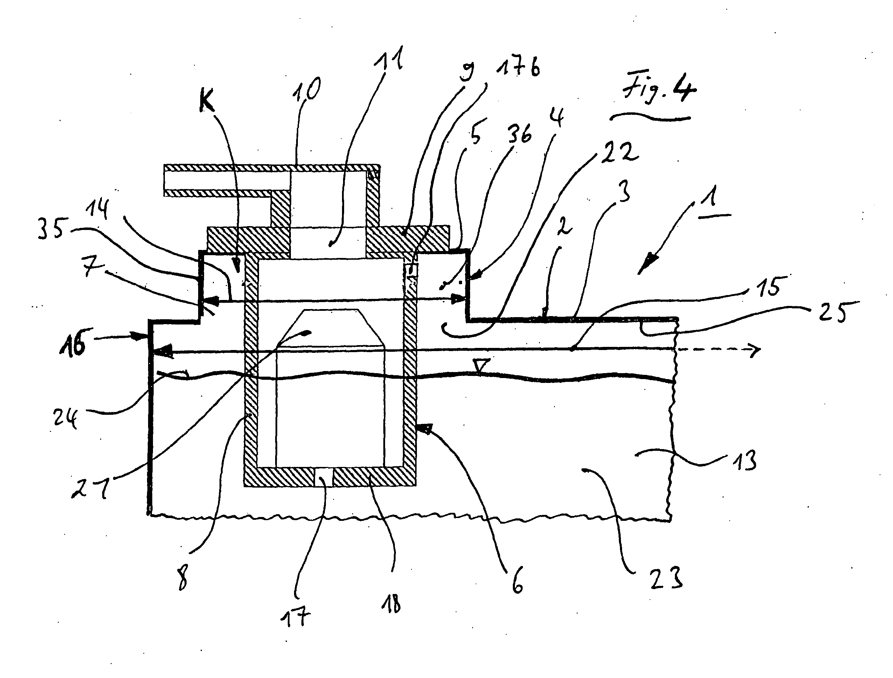

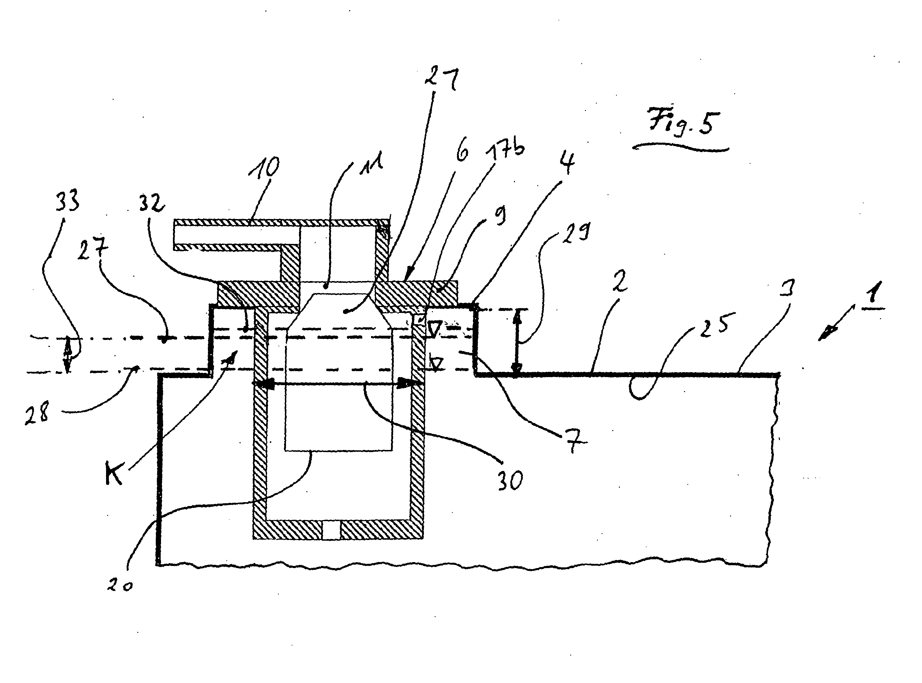

Bei dem in Fig. 4 und 5 gezeigten Ausführungsbeispiel weist der Tank einen aus seiner Oberseite vorstehenden Dom 4 mit einer oberen Wand 5 auf. Das Entlüftungsventil 6 durchgreift die Wand 5 und stützt sich mit seinem Flansch 9 auf dieser ab. Masse und Volumen des Schwimmers 19 sind so ausgelegt, dass in der Schließstellung des Schwimmers 19 der Schließpegel 27 innerhalb des Doms 4 angeordnet ist. Die Innenquerschnittsfläche 14 des Doms 4 ist wesentlich kleiner als die Innenquerschnittsfläche 15 des Kraftstofftanks 1. Der zwischen dem Dom 4 und dem Ventilgehäuse 8 vorhandene Ringraum 36 ist der oben erwähnte, den Verbindungskanal K bildende Raum. Der Ringraum 36 ist unterseits über die Mündungsöffnung 22 mit dem Tankinnenraum 13 verbunden. Der sich in den Dom 4 hinein erstreckende Abschnitt des Ventilgehäuses 8 ist oberhalb des Schließpegels 27 von wenigstens einer obersten Wandöffnung 17b durchbrochen. Der Dom 4 weist eine beispielsweise zylindrisch geformte Seitenwand 35 auf.

Die Funktionsweise ist prinzipiell die gleiche wie bei dem weiter oben beschriebenen Ausführungsbeispiel. Beim Betanken steigt der Pegel 24 des Kraftstoffs 23 an, was schließlich zu einem Aufschwimmen des Schwimmers 19 führt. Der Kraftstoff gelangt durch die Öffnungen 17 in den Ventilinnenraum 12. Durch das Einfüllrohr 1a (Fig.1 und 2) zuströmender Kraftstoff 23 verdrängt im Tankinnenraum 13 vorhandenes Gas über die Entlüftungsöffnung 11 und den Anschlussstutzen 10. Nachdem der Pegel 24 des Kraftstoffs die Unterseite 25 der Wand 2 des Kraftstofftanks 1 und die Mündungsöffnung 22 erreicht hat, kann der Kraftstoff nur noch innerhalb des Ringraums 36 ansteigen und darin enthaltendes Gas über die Wandöffnung 17b und die Entlüftungsöffnung 11 verdrängen. Aufgrund der unterhalb der Wandöffnung 17b vorhandenen Wandöffnungen 17 gelangt gleichzeitig Kraftstoff in den Ventilinnenraum 12. Dabei ist es vorteilhaft, wenn die Wandöffnungen 17 und 17b so ausgelegt sind, dass der Kraftstoff im Ventilinnenraum 12 im Wesentlichen gleich schnell ansteigt wie der sich außerhalb des Entlüftungsventils 6 befindliche Kraftstoff. Wenn der Kraftstoffspiegel im Ventilinnenraum 12 zu langsam steigt, könnte Kraftstoff über die Wandöffnung 17b in den Ventilinnenraum 12 gelangen, bevor der Schwimmer 19 die Entlüftungsöffnung 11 verschließt. Es könnte dann Kraftstoff mit dem die Entlüftungsöffnung passierenden Gasstrom mitgerissen werden und in den Aktivkohlefilter oder gar in die Umgebung gelangen. Wenn der Kraftstoff im Ventilinnenraum zu schnell ansteigt, besteht die Möglichkeit, dass die Entlüftungsöffnung 11 verschlossen wird, bevor der Kraftstoff im Tankinnenraum 13 bis zur oberen Tankwand gestiegen ist.

Wenn im Ventilinnenraum 12 der Schließpegel 27 erreicht ist, verschließt der Schwimmer 19 mit seinem Dichtelement 21 die Entlüftungsöffnung 11. Wie weiter oben geschildert, kann noch eine gewisse Menge an Kraftstoff in den Tank eingefüllt werden, bevor die Zapfpistole abschaltet. Der Pegel im Ventilinnenraum 12 ist nun auf den Abschaltpegel 32 angestiegen. Um den Kraftstoffspiegel innerhalb des Ventils auf den Öffnungspegel 28 abzusenken, muss im Vergleich zu herkömmlichen Kraftstofftanks (Fig. 1, 2) nur eine geringe Kraftstoffmenge verbraucht werden. Diese entspricht etwa der sich zwischen dem Abschaltpegel 32 und dem Öffnungspegel 28 im Ringraum 36 und im Ventilinnenraum enthaltenen Kraftstoffmenge.

An dieser Stelle sei angemerkt, dass der Schließpegel 27 und der Abschaltpegel 32 keine unbestimmten, nicht reproduzierbaren Angaben sind. Die genannten Pegel sind vielmehr als geometrische Höhenlagen zu betrachten, die sich sowohl durch Berechnung als auch empirisch ermitteln lassen.

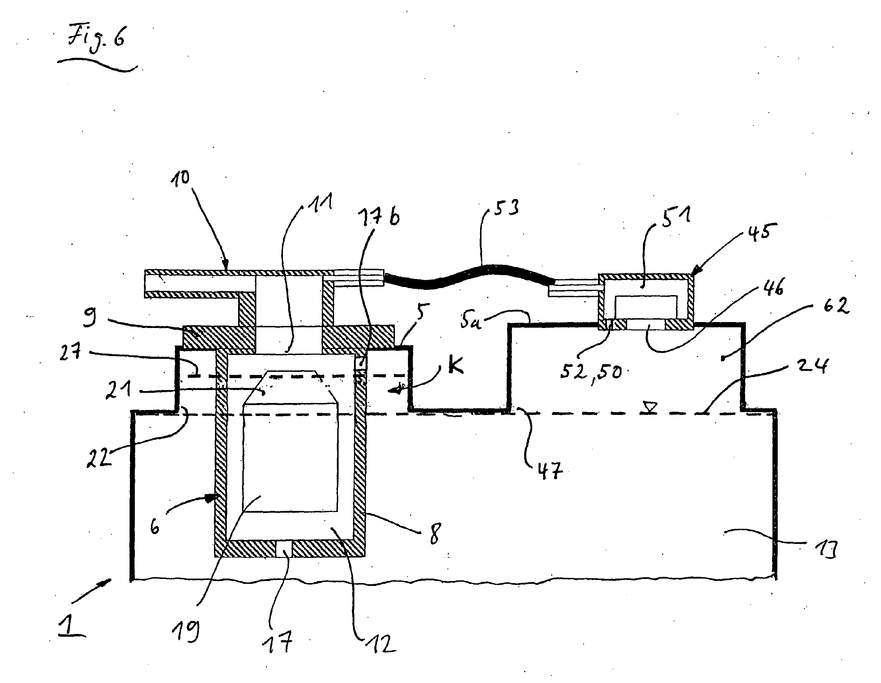

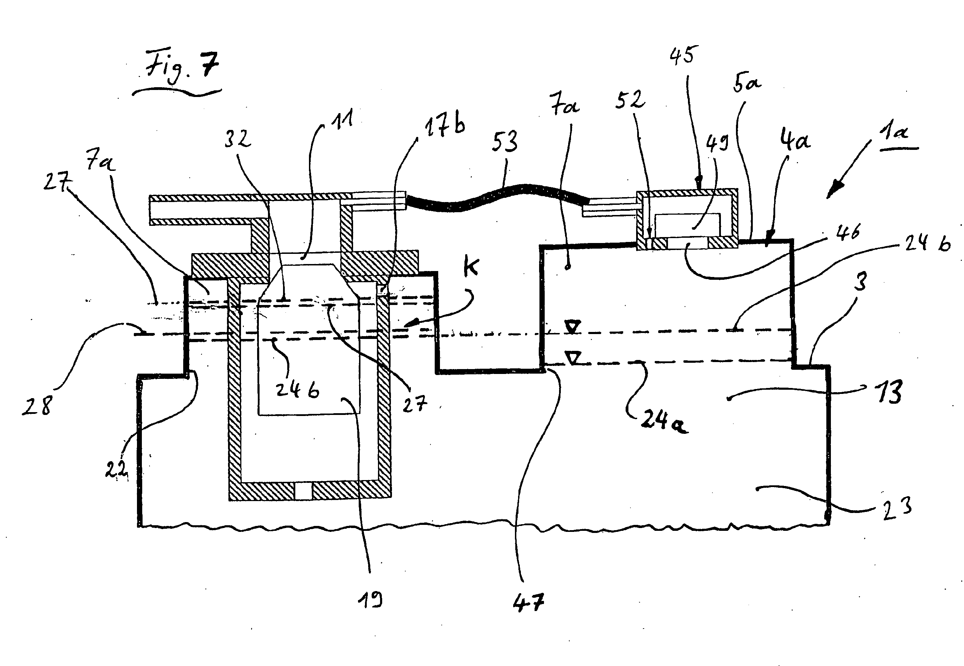

Bei dem in Fig. 6 und 7 gezeigten Ausführungsbeispiel weist der Kraftstofftank 1 einen aus seiner Oberseite 3 vorstehenden zweiten Dom 4a mit einer oberen Wand 5a auf, die von einer von einem Druckhalteventil 45 verschlossenen Öffnung 46 durchsetzt ist. Der Innenraum des Doms 4a ist über eine Mündungsöffnung 47 mit dem Tankinnenraum 13 verbunden. Die Mündungsöffnung 47 ist unterhalb des Schließpegels 27 des dem ersten Dom 4 zugeordneten Entlüftungsventils 6 angeordnet. Außerdem verläuft sie zusammen mit der Mündungsöffnung 22 des ersten Doms 4 etwa in einer gemeinsamen Ebene.

Beim Betanken steigt der Kraftstoff 23 an, und erreicht etwa gleichzeitig die Mündungsöffnungen 22, 47 der beiden Dome 4, 4a. Aufgrund des am zweiten Dom 4a vorhandenen Druckhalteventil 45, das z.B. so gestaltet ist, dass es die Öffnung 46 mit einem gewichteten Dichtelement 49 überdeckt, kann das im zweiten Dom 4a vorhandene Gas nicht über die Öffnung 36 abströmen, so dass ein weiteres Ansteigen des Kraftstoffs 23 im zweiten Dom 4a durch Aufbau eines Gas-Gegendruckes verhindert ist bzw. nur noch in geringem Ausmaß möglich ist. Das Druckhalteventil 45 ist beispielsweise auf einen Öffnungsdruck von 40 hPa eingestellt. Im ersten Dom 4 kann aufgrund der relativ großen Entlüftungsöffnung 11 der Kraftstoff ungehindert ansteigen und den Schwimmer 19 anheben. Der Innenraum 62 des Doms 4a steht über einen Soll-Leckagekanal 52 mit der Umgebung in Verbindung, wobei dessen Strömungsquerschnitt wesentlich kleiner ist als der Strömungsquerschnitt der Entlüftungsöffnung 11. Der Soll-Leckagekanal 52 ist eine Bohrung 50 im Gehäuse des Druckhalteventils 45, welche dessen Innenraum 51 mit dem Innenraum 62 des Doms 4a verbindet. Über eine Verbindungsleitung 53 ist der Innenraum 51 des Druckhalteventils 45 mit dem Anschlussstutzen 10 des Entlüftungsventils 6 verbunden. Den Kraftstofftank 1 über die Verbindungsleitung 53 verlassende Gase gelangen somit ebenfalls nicht direkt in die Umgebung sondern werden im Aktivkohlekanister (nicht gezeigt) von Kraftstoffanteilen befreit. Aufgrund der großen Querschnittsunterschiede des Soll-Leckagekanals 52 und der Entlüftungsöffnung 11 steigt der Kraftstoff im ersten Dom 4 erheblich schneller an und erreicht schließlich den Abschaltpegel 27. Während dessen ist der Kraftstoffpegel 24a im zweiten Dom 4a nur geringfügig angestiegen. Der Strömungsquerschnitt des Soll-Leckagekanals 52 ist so bemessen, dass nach einer Zeitdauer beispielsweise von mehreren Sekunden nach dem Abschalten der Zapfpistole, sich im ersten Dom 4 und im zweiten Dom 4a der gleiche Kraftstoffpegel 24b einstellt. Die beiden Dome 4, 4a sind nun vorzugsweise so ausgelegt, dass sich der gemeinsame Kraftstoffpegel 24b auf einem unterhalb des Öffnungspegels 28 liegenden Höhenniveau einstellt. Der Schwimmer 19 befindet sich dann in einer Stellung, in der er die Entlüftungsöffnung 11 frei gibt. Es wird somit schon nach kurzer Zeit ein Zustand erreicht, bei dem die Entlüftungsöffnung 11 freigegeben ist und prinzipiell ein Nachtanken möglich ist. Das bedeutet, dass selbst ein sehr geringer Kraftstoffverbrauch bei nur kurzen Fahrtstrecken nicht zu Lasten des nächsten Kunden oder des Vermieters geht. Die genannte Ausgestaltung gewährleistet auch, dass mindestens ein Nachtankschritt möglich ist, etwa um den zu zahlenden Preis für den Kraftstoff auf eine gerade Zahl aufzurunden. Der zweite Dom 4a ist zweckmäßigerweise so bemessen, dass er bei gleicher Füllhöhe eine größere Kraftstoffmenge aufnimmt als der erste Dom 4. Die aus dem ersten Dom 4 nachfließende Kraftstoffmenge, welche etwa den sich zwischen dem Abschaltpegel 32 und dem Öffnungspegel 28 befindlichen Kraftstoffvolumina entspricht, bewirkt somit nur eine verhältnismäßig geringe Pegelerhöhung im zweiten Dom 4a. Die Auslegung der beiden Dome 4,4a kann etwa so sein, dass der in Fig. 7 gezeigte Pegel 24b erst nach mehrmaligem Nachtanken erreicht wird. Der zweite Dom 4a stellt somit einen Speicherbehälter für das aus dem ersten Dom nachfließende Kraftstoffvolumen dar. Damit über das Druckhalteventil 35 bei einer unfallbedingten Kopflage des Fahrzeugs kein Kraftstoff in die Umgebung gelangen kann, ist eine Roll-Over-Funktion vorgesehen, d.h. die Öffnung 46 wird innenseitig von einem entsprechenden Ventil, beispielsweise einem Rollover-Ventil (nicht gezeigt) verschlossen.

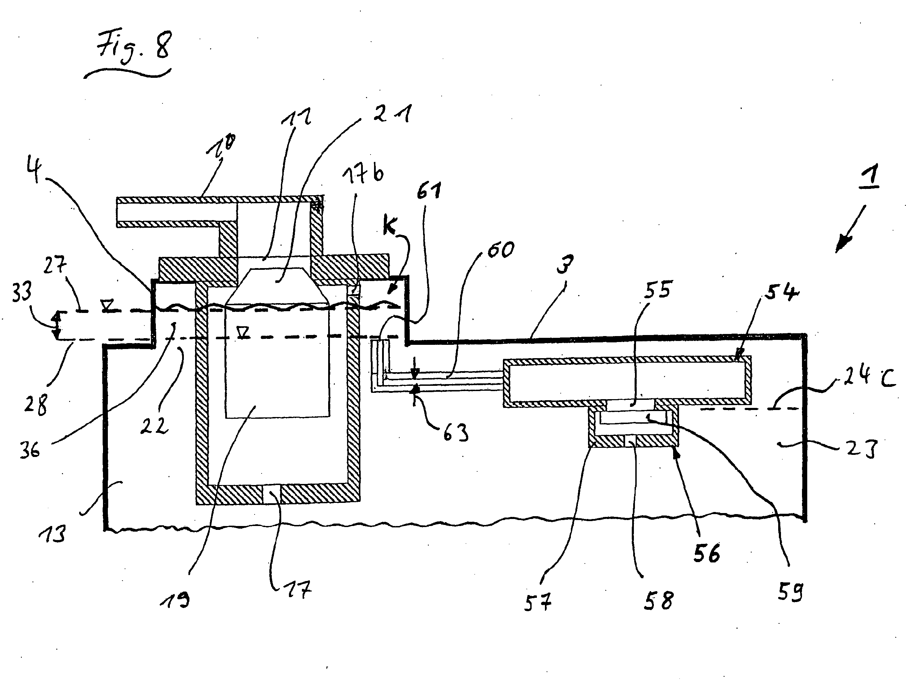

Ein Speicherbehälter entsprechend Dom 4a kann aber auch auf eine andere Weise geschaffen werden. Die Ausgestaltung gemäß Fig. 8 ist dafür ein Beispiel. Im Tankinnenraum 13 des nur einen Dom 4 aufweisenden Kraftstofftanks 1 ist ein separater Speicherbehälter 54 vorhanden. An der Unterseite des Speicherbehälters 54 bzw. an dessen tiefster Stelle ist eine Abflussöffnung 55 vorgesehen, die von einem außenseitig am Speicherbehälter 54 angeordneten Absperrventil 56 gesteuert wird. Das Absperrventil 56 kann aber auch innerhalb des Speicherbehälters 54 positioniert sein. Die Gehäusewand 57 des Absperrventils 56 ist in einem unteren Bereich von wenigstens einer Öffnung 58 durchsetzt, über die Kraftstoff eintreten kann. Im Absperrventil 56 ist beispielsweise ein plattenförmiges Dichtelement 59 vorhanden, dass durch in das Ventil gelangenden Kraftstoff angehoben und gegen die Öffnung 55 bzw. einen diese umgrenzenden Dichtsitz gedrückt wird. Bei dem in Fig. 8 angedeuteten Kraftstoffpegel 24c wird die Abflussöffnung 55 verschlossen, so dass kein Kraftstoff in den Speicherbehälter 54 eindringen kann. Der Speicherbehälter 54 ist außerhalb des Doms 4 angeordnet, ist mit diesem aber über eine Verbindungsleitung 60 fluidisch verbunden. Diese endet im Dom 4 bzw. in dem von diesem umgrenzten Ringraum 36 mit einer Einlassöffnung 61, die auf einem Höhenniveau angeordnet ist, welches etwa dem Öffnungspegel 28 entspricht oder das sich knapp unterhalb dieses Pegels befindet.

Wenn beim Betanken der Kraftstoff bis zum Abschaltpegel 32 angestiegen ist und die Zapfpistole abgeschaltet hat, fließt das sich oberhalb der Einlassöffnung 61 des Verbindungskanals 60 befindliche Kraftstoffvolumen in den Speicherbehälter 54 ab. Dieser weist beispielsweise ein im Vergleich zum zufließenden Kraftstoffvolumen großes Speichervolumen auf, so dass eine sich dabei aufgrund des verdrängten Gasvolumens ergebende Druckerhöhung im Speicherbehälter gering ist, so dass ein praktisch ungehinderter Kraftstoffzufluss möglich ist. Vorzugsweise ist aber der Speicherbehälter 54 mit einer Belüftungsleitung (nicht gezeigt) an ein Entlüftungssystem des Kraftstofftanks 1, beispielsweise an den Anschlussstutzen 10 angeschlossen. Die Geschwindigkeit des Abflusses der oberhalb der Einlassöffnung 61 anstehenden Kraftstoffmenge kann über den Strömungsquerschnitt 63 des Verbindungskanals 60 gesteuert, beispielsweise auf einen Zeitraum eingestellt werden, nach dessen Verstreichen ein Wiederbetanken möglich sein soll.

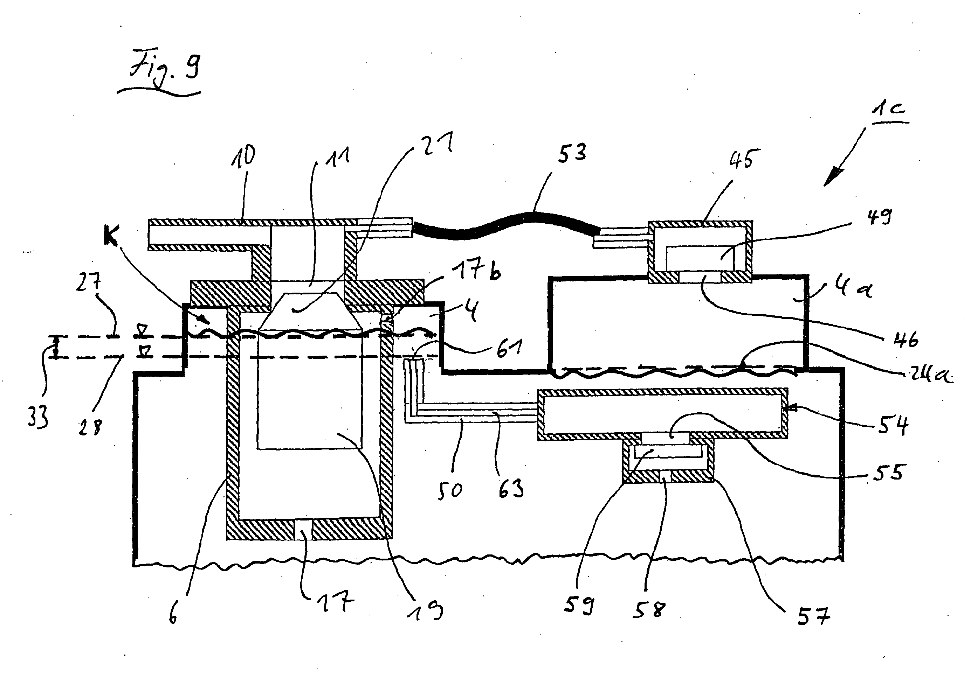

Der in Fig. 9 gezeigte Kraftstofftank 1 ist eine Kombination der Ausführungsbeispiel gem. Fig. 7 und 8. Deren Funktionsprinzipien sind hier in Kombination vorhanden, so dass diesbezüglich auf die obigen Ausführungen verwiesen wird. Eine Ausgestaltung gem. Fig. 9 kann etwa dann zweckmäßig sein, wenn eine größere Anzahl von Nachtankschritten erlaubt sein soll und aus Platzgründen das dafür erforderliche Speichervolumen weder durch einen zweiten Dom 4a noch durch einen alleinigen Speicherbehälter 54 zur Verfügung gestellt werden kann.

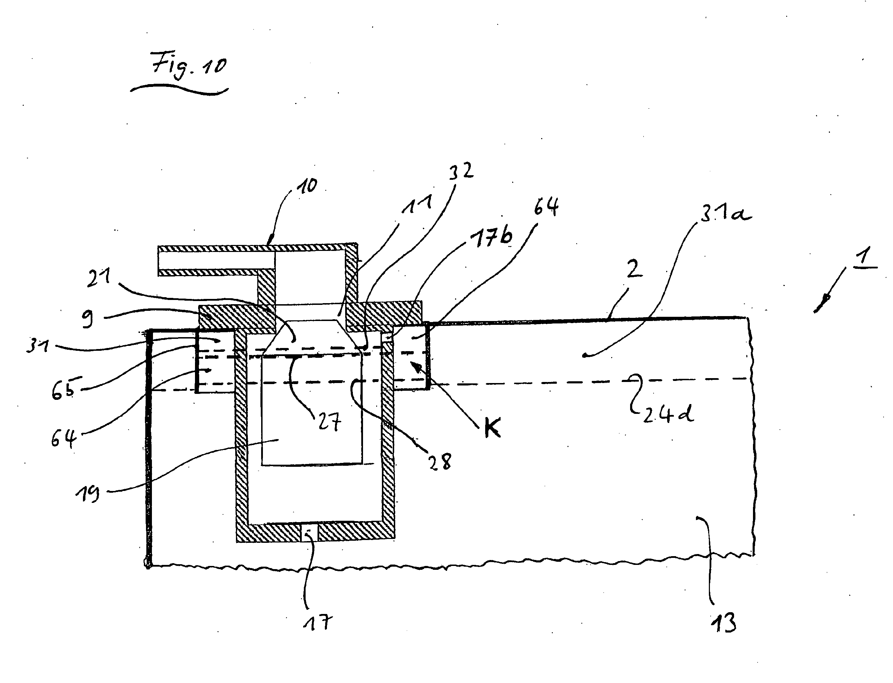

Fig. 10 zeigt ein Ausführungsbeispiel, bei dem der Verbindungskanal K ebenfalls von einem einen oberen Längsabschnitt des Ventilgehäuses 8 umgreifenden Ringraum 64 gebildet ist. Es liegt hier eine ähnliche Situation vor wie bei dem Ausführungsbeispiel Kraftstofftank von Fig. 4. Dort ist der Ringraum 36 in dem Dom 4 vorhanden, ist also oberhalb der oberen Tankwand 5 angeordnet. Bei dem Tank gem. Fig. 10 ist der Ringraum 64 von einer das Entlüftungsventil 6 mit Radialabstand umfassenden Wand umgrenzt, die beispielsweise als zylindermantelförmige Ringwand 65 ausgebildet ist. Die Ringwand 65 erstreckt sich von der oberen Wand 5 des Kraftstofftanks 1 weg. Denkbar ist aber auch, dass die Ringwand 65 nicht mit der oberen Tankwand 5 verbunden, sondern Teil eines außen am Ventilgehäuse 8 fixierten glockenförmigen Gebildes (nicht gezeigt) ist. In der Wand des Ventilgehäuses 8 ist eine oberste Wandöffnung 17b vorhanden, wobei diese auf einem Höhenniveau oberhalb des Schließpegels 27 positioniert ist. Der Ringraum 64 ist unterseitig offen, steht mit einer Mündungsöffnung 22 mit dem Tankinnenraum 13 in Verbindung.

Steigt beim Betanken der Kraftstoffpegel an, erreicht er kurz vor Ende des Betankungsvorgangs die Mündungsöffnung 22. Das sich außerhalb der Ringwand 65 befindliche Gaspolster 31a, das nun von der Atmosphäre abgetrennt ist, bewirkt, dass der Kraftstoff außerhalb der Ringwand 65 nur noch wenig ansteigen kann und im Abschaltzeitpunkt der Zapfpistole etwa ein Pegelstand 24d erreicht wird. Dagegen steigt der Kraftstoff innerhalb des Ventilgehäuses 8 und im Ringraum 64 weiter an, so dass der Schließpegel 27 und schließlich der Abschaltpegel 32 erreicht wird. Damit der Kraftstoffpegel im Ventilinnenraum 12 auf den Öffnungspegel absinkt und die Entlüftungsöffnung 11 freigegeben wird, ist nur ein geringer Kraftstoffverbrauch während des sich an den Betankungsvorgang anschließen Fahrzeugbetrieb erforderlich. Es reicht aus, wenn der Pegel 24d so weit absinkt, dass er die Mündungsöffnung 22 freigibt. Dann sinkt der Kraftstoffpegel im Ventilinnenraum 12 und im Ringraum 64 gleichzeitig ab, wobei schließlich der Öffnungspegel 28 erreicht wird, bei dem die Entlüftungsöffnung 11 freigegeben wird. Denkbar ist natürlich auch, dass der Kraftstoffpegel im Ventilgehäuse 8 zunächst auf ein dem Kraftstoffpegel 24d des Tankinnenraums 13 entsprechendes Niveau absinkt.

### Bezugszeichenliste

- 1: Kraftstofftank
- 1a: Einfüllrohr
- 2: obere Wand
- 3: Oberseite
- 4: erster Dom
- 4a: zweiter Dom
- 5: Wand
- 6: Entlüftungsventil
- 8: Ventilgehäuse
- 9: Flansch
- 10: Anschlussstutzen
- 11: Entlüftungsöffnung
- 12: Ventilinnenraum
- 13: Tankinnenraum
- 14: Innenquerschnittsfläche
- 15: Innenquerschnittsfläche
- 16: Bereich
- 17: Wandöffnung
- 18: Boden
- 19: Schwimmer
- 20: Unterseite
- 21: Dichtelement
- 22: Mündungsöffnung
- 23: Kraftstoff
- 24: Kraftstoffpegel
- 25: Unterseite
- 27: Schließpegel
- 28: Öffnungspegel
- 29: Innenhöhe
- 30: Außenquerschnittsfläche
- 31: Gaspolster
- 32: Abschaltpegel
- 33: Abstand
- 34: Niveau
- 35: Seitenwand
- 36: Ringraum
- 45: Druckhalteventil
- 46: Öffnung
- 47: Mündungsöffnung
- 48: Mündungsöffnung
- 49: Dichtelement
- 50: Bohrung
- 51: Innenraum
- 52: Soll-Leckagekanal
- 53: Verbindungsleitung
- 54: Speicherbehälter
- 55: Abflussöffnung
- 56: Absperrventil
- 57: Gehäusewand
- 58: Öffnung
- 49: Dichtelement
- 60: Verbindungsleitung
- 61: Einlassöffnung
- 62: Innenraum
- 63: Strömungsquerschnitt
- 64: Ringraum
- 65: Ringwand

## Patentansprüche

1. Kraftstofftank für ein Kraftfahrzeug, mit einem ein Ventilgehäuse (8) und eine Entlüftungsöffnung (11) aufweisenden Entlüftungsventil (6), das in einer oberen Öffnung des Tanks eingesetzt ist und in das Tankinnere hineinragt, wobei
- die Wand des Ventilgehäuses (8) von wenigstens einer Wandöffnung (17) durchsetzt ist,
- im Ventilgehäuse (8) ein zwischen einer Ruhestellung und einer Schließstellung beweglicher Schwimmer (19) angeordnet ist, der an seinem oberen Ende ein Dichtelement (21) trägt,
- der Schwimmer (19) in der Ruhestellung sich in einer unteren Position im Ventilgehäuse (8) befindet und das Dichtelement (21) die Entlüftungsöffnung (11) freigibt,
- der Schwimmer (19) in der Schließstellung bei einem vorgegebenen Kraftstoffpegel, dem Schließpegel (27), mit seinem Dichtelement (21) die Entlüftungsöffnung (11) verschließt,
- zwischen dem Ventilinnenraum (12) und dem Tankinnenraum (13), ein Verbindungskanal (K) angeordnet ist, welcher mit einer unterhalb des Schließpegels (27) liegenden Mündungsöffnung (22) in den Tankinnenraum (13) mündet,
**dadurch gekennzeichnet, dass**
die Mündungsöffnung (22) oberhalb von allen sonstigen unmittelbar mit dem Tankinnenraum in Verbindung stehenden Wandöffnungen (17) angeordnet ist.

2. Kraftstofftank nach Anspruch 1,
**dadurch gekennzeichnet,**
**dass** der Verbindungskanal (K) von wenigstens einer oberhalb sonstiger Wandöffnungen (17) positionierten obersten Wandöffnung (17a) gebildet ist.

3. Kraftstofftank nach Anspruch 1 oder 2,
**dadurch gekennzeichnet,**
**dass** der Verbindungskanal (K) eine außerhalb des Ventilinnenraums(12) im Kraftstofftank (1) angeordnete, von einer Wand umgrenzte Kammer umfasst, die mit dem Tankinnenraum (13) über wenigstens eine Mündungsöffnung (22) und mit dem Ventilinnenraum (12) über wenigstens eine oberhalb sonstiger Wandöffnungen (17) positionierte oberste Wandöffnung (17b) des Ventilgehäuses fluidisch verbunden ist

4. Kraftstofftank nach Anspruch 3,
**dadurch gekennzeichnet,**
**dass** die Kammer das Ventilgehäuse in dessen Umfangsrichtung zumindest teilweise umgreift.

5. Kraftstofftank nach Anspruch 4,
**dadurch gekennzeichnet,**
**dass** die Kammer einen das Ventilgehäuse mit Radialabstand zumindest teilweise umgreifenden Wandabschnitt aufweist, deren unterer Rand zusammen mit der Außenseite des Ventilgehäuses die Mündungsöffnung umgrenzt.

6. Kraftstofftank nach Anspruch 3,
**dadurch gekennzeichnet,**
**dass** die Kammer von einem aus der Oberseite (3) des Kraftstofftanks (1) vorstehenden, eine obere Wand (5) aufweisenden Dom (4) gebildet ist, wobei das Entlüftungsventil (6) eine Öffnung der Wand (5) durchsetzt.

7. Kraftstofftank nach Anspruch 6,
**dadurch gekennzeichnet,**
**dass** er einen aus seiner Oberseite (3) vorstehenden zweiten Dom (4a) mit einer oberen Wand (5a) aufweist, die von einer von einem Druckhalteventil (45) verschlossenen Öffnung (46) durchsetzt ist, wobei der Innenraum des zweiten Doms (4a) über eine Mündungsöffnung (47) mit dem Tankinnenraum (13) verbunden ist, die unterhalb des Schließpegels (27) angeordnet ist, und wobei der Innenraum des Doms (4a) über einen Soll-Leckagekanal (52) mit der Atmosphäre in Verbindung steht, dessen Strömungsquerschnitt kleiner ist als der Strömungsquerschnitt der Entlüftungsöffnung (11) des Entlüftungsventils (6).

8. Kraftstofftank nach Anspruch 7,
**dadurch gekennzeichnet,**
**dass** der Soll-Leckagekanal (52) in ein einen Aktivkohlekanister umfassendes Entlüftungssystem des Kraftstofftanks (1) mündet.

9. Kraftstofftank nach einem der Ansprüche 3 bis 8,
**gekennzeichnet durch**
einen im Tankinnenraum (13) angeordneten Speicherbehälter (54), an den ein mit einer unterhalb des Schließpegels (27) angeordneten Einlassöffnung (61) in den Innenraum des Speicherbehälters (54) mündender Verbindungskanal (60) angeschlossen ist, wobei eine untere Wand des Speicherbehälters (54) von einer Abflussöffnung (55) durchsetzt ist, die mittels eines am Speicherbehälter (54) angeordneten Absperrventils (56) verschließbar ist.

10. Kraftstofftank nach Anspruch 9,
**gekennzeichnet durch**
ein schwimmergesteuertes Absperrventil (56).

11. Kraftstofftank nach Anspruch 9 oder 10,
**dadurch gekennzeichnet,**
**dass** der Speicherbehälter (54) über einen Entlüftungskanal mit der Atmosphäre in Verbindung steht.

12. Kraftstofftank nach Anspruch 11,
**dadurch gekennzeichnet,**
**dass** der Entlüftungskanal in ein einen Aktivkohlekanister umfassendes Entlüftungssystem des Kraftstofftanks (1) mündet.

## Claims

1. Fuel tank for a motor vehicle, having a ventilation valve (6) which has a valve housing (8) and a ventilation opening (11), which ventilation valve (6) is inserted into an upper opening of the tank and projects into the tank interior, wherein
- at least one wall opening (17) extends through the wall of the valve housing (8),
- a float (19) which is movable between a rest position and a closed position is arranged in the valve housing (8), which float (19) bears a sealing element (21) on its upper end,
- in the rest position, the float (19) is situated in a lower position in the valve housing (8) and the sealing element (21) opens up the ventilation opening (11),
- in the closed position at a predefined fuel level, the closing level (27), the float (19), with its sealing element (21), closes off the ventilation opening (11),
- a connecting duct (K) is arranged between the valve interior (12) and the tank interior (13), which connecting duct (K) opens with an aperture opening (22), which lies below the closing level (27), into the tank interior (13),
**characterized in that**
the aperture opening (22) is arranged above all other wall openings (17) which are directly connected to the tank interior.

2. Fuel tank according to Claim 1,
**characterized**
**in that** the connecting duct (K) is formed by at least one uppermost wall opening (17a) which is positioned above other wall openings (17).

3. Fuel tank according to Claim 1 or 2,
**characterized**
**in that** the connecting duct (K) comprises a chamber which is arranged outside the valve interior (12) in the fuel tank (1) and which is bounded by a wall, which chamber is fluidically connected to the tank interior (13) via at least one aperture opening (22) and to the valve interior (12) via at least one uppermost wall opening (17b), which is positioned above other wall openings (17), of the valve housing..

4. Fuel tank according to Claim 3,
**characterized**
**in that** the chamber engages at least partially around the valve housing in the circumferential direction thereof.

5. Fuel tank according to Claim 4,
**characterized**
**in that** the chamber has a wall section which engages at least partially around the valve housing with a radial spacing and whose lower edge together with the outer side of the valve housing bounds the aperture opening.

6. Fuel tank according to Claim 3,
**characterized**
**in that** the chamber is formed by a dome (4) which projects from the upper side (3) of the fuel tank (1) and which has an upper wall (5), with the ventilation valve (6) extending through an opening in the wall (5).

7. Fuel tank according to Claim 6,
**characterized**
**in that** said fuel tank has, projecting from its upper side (3), a second dome (4a) with an upper wall (5a) through which extends an opening (46) which is closed off by a pressure retaining valve (45), with the interior of the second dome (4a) being connected to the tank interior (13) via an aperture opening (47) which is situated below the closing level (27), and with the interior of the dome (4a) being connected to the atmosphere via a nominal leakage duct (52) whose flow cross section is smaller than the flow cross section of the ventilation opening (11) of the ventilation valve (6).

8. Fuel tank according to Claim 7,
**characterized**
**in that** the nominal leakage duct (52) opens into a ventilation system, which comprises an activated carbon canister, of the fuel tank (1).

9. Fuel tank according to one of Claims 3 to 8,
**characterized by**
a storage tank (54) which is arranged in the tank interior (13) and to which is connected a connecting duct (60) which opens into the interior of the storage tank (54) via an inlet opening (61) which is arranged below the closing level (27), with an outflow opening (55) extending through a lower wall of the storage tank (54), which outflow opening (55) can be closed off by means of a shut-off valve (56) arranged on the storage tank (54).

10. Fuel tank according to Claim 9,
**characterized by**
a float-controlled shut-off valve (56).

11. Fuel tank according to Claim 9 or 10,
**characterized**
**in that** the storage tank (54) is connected to the atmosphere via a ventilation duct.

12. Fuel tank according to Claim 11,
**characterized**
**in that** the ventilation duct opens into a ventilation system, which comprises an activated carbon canister, of the fuel tank (1).

## Revendications

1. Réservoir de carburant pour un véhicule automobile, comprenant une soupape (6) de mise à l'atmosphère, ayant une boîte (8) de soupape et une ouverture (11) de mise à l'atmosphère, la soupape étant insérée dans une ouverture supérieure du réservoir et pénétrant à l'intérieur du réservoir, dans lequel
- la paroi de la boîte (8) de la soupape est traversée par au moins une ouverture (17) de paroi,
- dans la boîte (8) de la soupape est disposé un flotteur (19) mobile entre une position de repos et une position de fermeture et portant un élément (21) d'étanchéité à son extrémité supérieure,
- le flotteur (19) se trouve, en la position de repos, dans une position inférieure dans la boîte (8) de soupape et l'élément (21) d'étanchéité dégage l'ouverture (11) de mise à l'atmosphère,
- le flotteur (19) en la position de fermeture ferme, pour un niveau prescrit du carburant, le niveau (27) de fermeture, l'ouverture (11) de mise à l'atmosphère par son élément (21) d'étanchéité,
- entre l'intérieur (12) de la soupape et l'intérieur (13) du réservoir est disposé un canal (K) de liaison, qui débouche à l'intérieur (13) du réservoir par une embouchure (22) se trouvant en dessous du niveau (27) de fermeture,
**caractérisé en ce que**
l'embouchure (22) est disposée au-dessus de toutes les autres ouvertures (17) de paroi communiquant directement avec l'intérieur du réservoir.

2. Réservoir de carburant suivant la revendication 1,
**caractérisé**
**en ce que** le canal (K) de liaison est formé par au moins une ouverture (17a) supérieure la plus haute, placée au-dessus des autres ouvertures (17) de paroi.

3. Réservoir de carburant suivant la revendication 1 ou 2,
**caractérisé**
**en ce que** le canal (K) de liaison comprend une chambre, qui est disposée, à l'extérieur de l'intérieur (12) de la soupape, dans le réservoir (1) de carburant, qui est délimitée par une paroi et qui communique fluidiquement avec l'intérieur du réservoir par au moins une embouchure (22), et avec l'intérieur (12) de la soupape par au moins une ouverture (17b) de paroi de la boîte de soupape la plus haute, placée au-dessus des autres ouvertures (17) de paroi.

4. Réservoir de carburant suivant la revendication 3,
**caractérisé**
**en ce que** la chambre entoure au moins en partie la boîte de soupape dans la direction du pourtour de celle-ci.

5. Réservoir de carburant suivant la revendication 4,
**caractérisé**
**en ce que** la chambre a une section de paroi entourant au moins en partie la boîte de soupape à distance radiale, section dont le bord inférieur délimite, ensemble avec le côté extérieur de la boîte de soupape, l'embouchure.

6. Réservoir de carburant suivant la revendication 3,
**caractérisé**
**en ce que** la chambre est formée par un dôme (4) en saillie du côté (3) supérieur du réservoir (1) et ayant une paroi (5) supérieure, la soupape (6) de mise à l'atmosphère passant dans une ouverture de la paroi (5).

7. Réservoir de carburant suivant la revendication 6,
**caractérisé**
**en ce qu'**il a un deuxième dôme (4a) en saillie sur son côté (3) supérieur et ayant une paroi (5a) supérieure, qui est traversée par une ouverture (6) fermée par une soupape (45) de maintien de la pression, l'intérieur du deuxième dôme (4a) communiquant avec l'intérieur (13) du réservoir par une embouchure (47), qui est disposée en dessous du niveau (27) de fermeture, et l'intérieur du dôme communiquant avec l'atmosphère par un canal (52) de fuite de consigne, dont la section transversale d'écoulement est plus petite que la section transversale d'écoulement de l'ouverture (11) de mise à l'atmosphère de la soupape (6) de mise à l'atmosphère.

8. Réservoir de carburant suivant la revendication 7,
**caractérisé**
**en ce que** le canal (52) de fuite de consigne débouche dans un système de mise à l'atmosphère du réservoir (1) comprenant une boîte de charbon actif.

9. Réservoir de carburant suivant l'une des revendications 3 à 8,
**caractérisé par**
une cuve (54) de stockage, qui est disposée à l'intérieur (13) du réservoir et à laquelle est raccordé un canal (6) de liaison débouchant, par une ouverture (61) d'entrée disposée en dessous du niveau (27) de fermeture, à l'intérieur de la cuve (54) de stockage, une paroi inférieure de la cuve (54) de stockage étant traversée par une ouverture (55) d'évacuation, qui peut être fermée au moyen d'une vanne (56) d'arrêt montée sur la cuve (54) de stockage.

10. Réservoir de carburant suivant la revendication 9,
**caractérisé par**
une vanne (56) d'arrêt commandée par le flotteur.

11. Réservoir de carburant suivant la revendication 9 ou 10,
**caractérisé**
**en ce que** la cuve (54) de stockage communique avec l'atmosphère par un canal de mise à l'atmosphère.

12. Réservoir de carburant suivant la revendication 11,
**caractérisé**
**en ce que** le canal de mise en atmosphère débouche dans un système de mise à l'atmosphère du réservoir (1) comprenant une boîte de charbon actif.
